# EUROPEAN PATENT APPLICATION

(11) **EP 1 526 698 A2**
(43) Date of publication of application: **27.04.2005**
(21) Application number: 04292491.0
(22) Date of filing: 20.10.2004
(51) Int. Cl.: H04L 29/06, H04L 12/22

(54) **Data transmission method and data transmission apparatus**

(30) Priority: 20.10.2003 JP 2003360024; 09.09.2004 JP 2004262851
(71) Applicant: SONY CORPORATION, Tokyo (JP)
(72) Inventor: Toba, Kazuaki, Sony Corporation, Shinagawa-ku, Tokyo (JP); Ichimura, Gen, Sony Corporation, Shinagawa-ku, Tokyo (JP)
(74) Representative: Thévenet, Jean-Bruno

(57) **Abstract**

The present invention relates to a data transmission method used in the data transmission system. The data transmission method decrypts encrypted data, applies again encryption effective in the transmission system at transmission time so as to transmit the encrypted data from a sending side (10) to a receiving side (20). The receiving side (20) applies decryption effective only at the transmission time to the transmitted data to obtain clear text.

## Description

### BACKGROUND OF THE INVENTION

### Field of the Invention

The present invention relates to a technique that prevents a malicious receiving side from making it possible to reproduce source contents without obtaining encrypted source contents from a transmission path by cracking the encryption applied first to the contents based on obtained large numbers of pairs of decrypted contents and encrypted source contents. The technique is used in a transmission system that reencrypts source contents supplied as the contents that have been encrypted according to a first encryption scheme using a second encryption scheme that is different from the first encryption scheme.

This application claims priority of Japanese Patent Application No. 2003-360024, filed on October 20, 2003, the entirety of which is incorporated by reference herein.

### Description of the Related Art

Video contents or audio contents (e.g., music) have been generally and widely distributed in the form of a recording medium that has stored the contents as digital data. In the case where a compression scheme that can obtain relatively high quality data, data to be distributed is encrypted so as to protect copyright of audio/video to be recorded or reproduced by users.

Various media including video or audio are now handled as digital contents on an information device, such as a computer, with the current progress of information technology. Further, advance of information-communication technology allows the contents to be distributed through satellite or terrestrial broadcasting, or through a wide-area network such as the Internet.

The distribution of video or audio contents has already been partly come into operation. Thanks to this contents distribution technology, distribution channels of the product or physical medium that has been conventionally used can be omitted, and even users at remote locations can easily obtain desired video/audio software. Further, in view of contents producer/provider side, quick and effective contents sale brings major profits to increase the willingness to create contents, leading to industry-wide advancement.

For example, a server/storage type broadcasting system that assumes that a television incorporates a large-capacity hard disk encrypts contents such as movie in a broadcasting station or other contents provider so as to distribute the contents, and charges purchasers, that is, viewers for the contents when delivering a cipher key to them, thereby ensuring a profit.

When video or audio contents provided as encrypted digital data is distributed, the following procedures are carried out: the sending side firstly decrypts the encrypted data, and then applies, at transmission time, encryption effective in a transmission system through which the contents data is transmitted to clear text data that has been decrypted so as to send the data to the receiving end; the receiving end applies decryption effective only at the transmission time to the data to obtain the original, clear text data safely.

As the above encryption processing, various schemes have been proposed to increase encryption strength, the schemes including, for example, an encryption scheme that transmits a file with a dummy file added to the file so that the receiving side can identify the dummy file (refer to, e.g., Jpn. Pat. Appln. Laid-Open Publication Nos. 2002-328603, and 2001-142396), one that inserts other data into data to be transmitted so as to encrypt it and removes the inserted data after applying decryption processing to the data on the receiving side (refer to e.g., Jpn. Pat. Appln. Laid-Open Publication No. 2001-305954), and one that allows a key to retain information related to a trick applied to data to be transmitted at the encryption time so as to remove dummy data added by the trick at the decryption time (refer to e.g., Jpn. Pat. Appln. Laid-Open Publication No. Hei.10-49048).

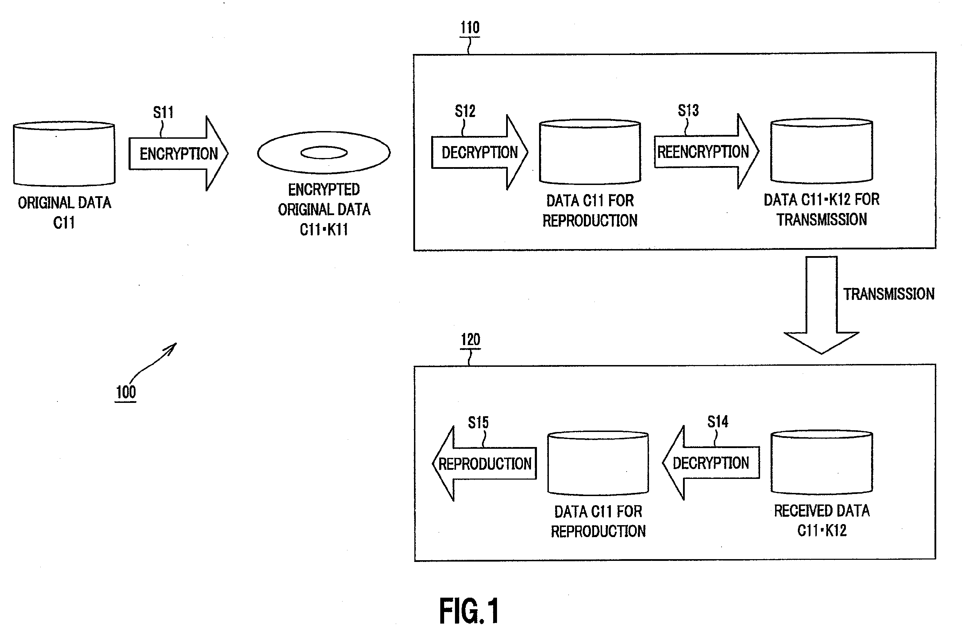

As shown in, for example, FIG. 1, in a normal data transmission method that has been carried out in a conventional data transmission system 100, original data C11 generated in the form of clear text is encrypted using one or more encryption techniques at distribution time for safe access and then supplied to a transmitter 110 as data C11·K11 that has been encrypted using, for example, a key K11 (stage S11).

The data C11·K11 that has been encrypted in the stage S11 is then safely decrypted within the transmitter 110 to become clear text data C11 for reproduction (stage S12).

For safe transmission, the clear text data C11 for reproduction generated within the transmitter 110 is reencrypted using the same encryption technique that can be decrypted both by the transmitter 110 and a receiver 120 at data transmission time to become data C11·K12 for transmission that has been reencrypted using, for example, a key K12 (stage S13). The reencrypted data C11·K12 for transmission is sent to the receiver 120.

Since the data C11·K12 for transmission is encrypted at the transmission time as described above, safety of the data can be ensured even when the data is output to an external device.

The receiver 120 decrypts the received data C11·K12 for transmission using the encryption scheme employed at the transmission time, that is, using the key 12 (stage S14). As a result, the clear text data C11 for reproduction can be obtained within the receiver 120.

Thus, it becomes possible to reproduce the clear text data C11 for reproduction obtained as described above on the receiver 120 side (stage S15). In this manner, data transmission has been completed with the safety of data ensured.

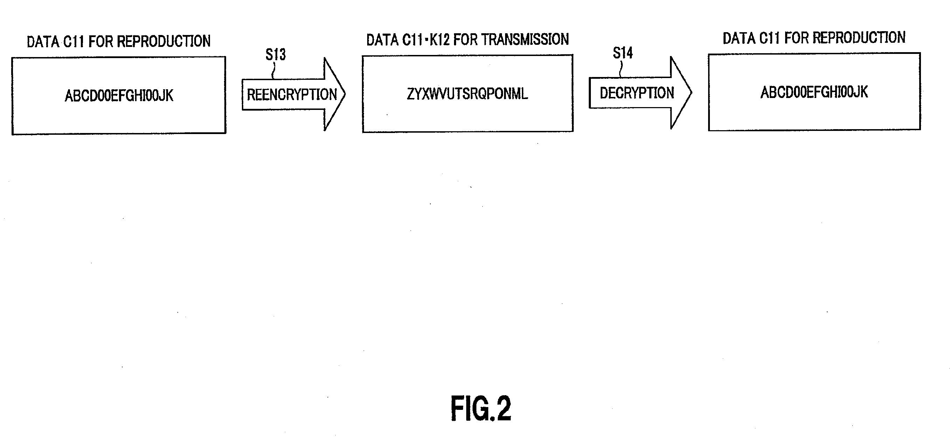

As shown in FIG. 2, clear text data C11 for reproduction (corresponding to original data C11) obtained by decrypting the encrypted data C11·K11 on the transmitter 110 side is assumed to be [ABCD00EFGHI00JK].

The transmitter 110 side then applies the decrypted clear text data C11 for reproduction, that is, [ABCD00EFGHI00JK] to reencryption using the key K12 to generate data C11·K12 for transmission, that is, for example, [ZYXWVUTSRQPONML], and sends the generated data to the receiver 120.

The receiver 120 side decrypts the data C11·K12 for transmission, that is, [ZYXWVUTSRQPONML] to obtain the clear text data C11 for reproduction, that is, [ABCD00EFGHI00JK].

However, it has been indicated that the following problem will occur in the aforementioned data transmission system 100 that decrypts encrypted data, then applies, at transmission time, encryption effective in a transmission system to clear text data that has been decrypted so as to send the data to the receiving end, and the receiving end applies decryption effective only at the transmission time to the transmitted data to obtain the original, clear text data safely. That is, in the normal data transmission method that has been conventionally carried out, a malicious receiver 120 can determine the cipher key 11 used for the encryption applied in the stage 11 by obtaining, in large amounts, the clear text data C11 for reproduction that is obtained in the stage S14 and the data C11·K11 that is delivered in the stage 11 and that corresponds to the data C11 for reproduction. Therefore, there is possibility that strength of an encryption technique in the stage S11 will be decreased.

### SUMMARY OF THE INVENTION

According to a first aspect of the present invention, there is provided a data transmission method that transmits an input source data that has been encrypted using a first encryption scheme into the data form that a receiver can decrypt, comprising the steps of: decrypting an encryption according to the first encryption scheme applied to the input source data; applying predetermined process to data in a predetermined position in the decrypted source data; encrypting the source data in which the predetermined process has been applied to the data in a predetermined position into the data form that the receiver can decrypt using a second encryption scheme different from the first encryption scheme; and transmitting the data that has been encrypted according to the second encryption scheme to the receiver.

According to a second aspect of the present invention, there is provided a data transmission apparatus that transmits an input source data that has been encrypted using a first encryption scheme into the data form that a receiver can decrypt, comprising: a decryption means for decrypting an encryption according to the first encryption scheme applied to the input source data; a data process means for applying predetermined process to data in a predetermined position in the decrypted source data; an encryption means for encrypting the source data in which the predetermined process has been applied to the data in a predetermined position into the data form that the receiver can decrypt using a second encryption scheme different from the first encryption scheme; and a transmission means for transmitting the data that has been encrypted according to the second encryption scheme to the receiver.

According to a third aspect of the present invention, there is provided a data receiving apparatus that receives the transmitted encrypted reproduction data and reproduces the data, the data transmitted to the receiver having been obtained by decrypting an encryption according to the first encryption scheme applied to the input source data that has been encrypted, applying predetermined process to data in a predetermined position in the decrypted source data, encrypting the source data in which the predetermined process has been applied to the data in a predetermined position into the data form that the receiver can decrypt using a second encryption scheme different from the first encryption scheme. The receiver comprises: a reception means for receiving the encrypted reproduction data; a reproduction means for reproducing the source data; a decryption means for decrypting the encrypted reproduction data received by the reception means; a detection means for detecting predetermined process applied to a part of the decrypted reproduction data; and a reproduction data supplement means for generating reproduction data that the reproduction means can reproduce, which is substantially the same as a part of the source data that has been processed, and adding the reproduction data to the detected processed portion so as to supply the reproduction means with the supplemented data.

### BRIEF DESCRIPTION OF THE DRAWINGS

FIG. 1 schematically shows data processing operation and its state in each stage in a data transmission method carried out in a conventional data transmission system;
FIG. 2 schematically shows an example of data processing operation in each stage in the conventional data transmission method;
FIG. 3 is a block diagram showing a configuration of a data transmission system according to the present invention;
FIG. 4 schematically shows data processing operation and its state in each stage in a data transmission method carried out in the data transmission system according to the present invention; and
FIG. 5 schematically shows an example of data processing operation in each stage in the data transmission method according to the present invention.

### DETAILED DESCRIPTION OF THE PREFERRED EMBODIMENTS

An embodiment of the present invention will be described below in detail with reference to the accompanying drawings.

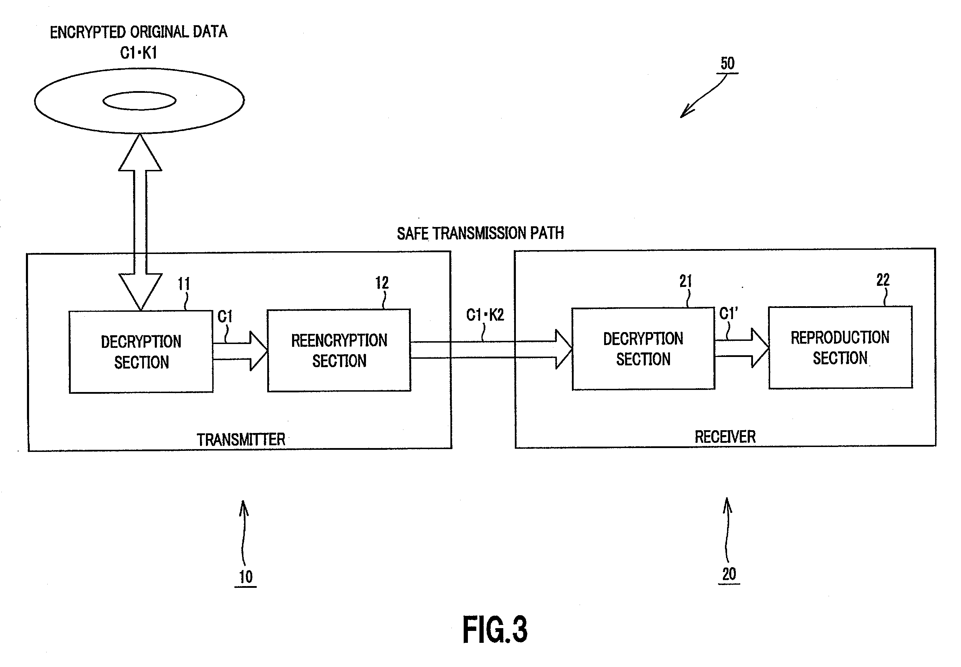

The present invention is applied to, for example, a data transmission system 50 having the configuration as shown in FIG. 3.

The data transmission system 50 is constructed as a system that distributes, for example, video or audio contents that have been provided as encrypted digital data. The data transmission system 50 includes: a transmitter 10 that decrypts encrypted data and again applies, at transmission time, encryption effective in the transmission system through which the data is transmitted to the data so as to transmit it to the receiving side; and a receiver 20 that receives the data transmitted from the transmitter 10 and applies decryption effective only at the transmission time to the data to obtain the original, clear text data.

The transmitter 10 includes: a decryption section 11 that applies decryption to encrypted original data to generate clear text data for reproduction; and a reencryption section 12 that processes a part of the clear text data for reproduction that has been generated by the decryption section 11 and encrypts the processed clear text data for reproduction using one or more encryption techniques.

The receiver 20 includes: a decryption section 21 that applies decryption to the data transmitted from the transmitter 10 to generate clear text data for reproduction; and a reproduction section 22 that reproduces the clear text data for reproduction that has been generated by the decryption section 21.

The transmitter 10 of the data transmission system 50 allows the decryption section 11 to decrypt encrypted original data and to generate decrypted clear text data for reproduction, and allows the reencryption section 12 to process a part of the clear text data for reproduction and to encrypt the processed clear text data for reproduction using one or more encryption techniques. After that, the transmitter 10 transmits the reencrypted data to the receiver 20 side.

The receiver 20 allows the decryption section 21 to decrypt the transmitted data that has been reencrypted by the transmitter 10 to generate processed clear text data for reproduction, and then allows the reproduction section 22 to reproduce the processed clear text data for reproduction.

The data transmission system 50 decrypts the data that has been obtained by encrypting, using one or more encryption techniques, data conforming to a format having an unallocated region such as a reserved region, applies, at transmission time, encryption effective in the transmission system through which the data is transmitted to the data so as to transmit it to the receiving side, and allows the receiving side to apply decryption effective only at the transmission time to the received data to obtain the original, clear text data safely.

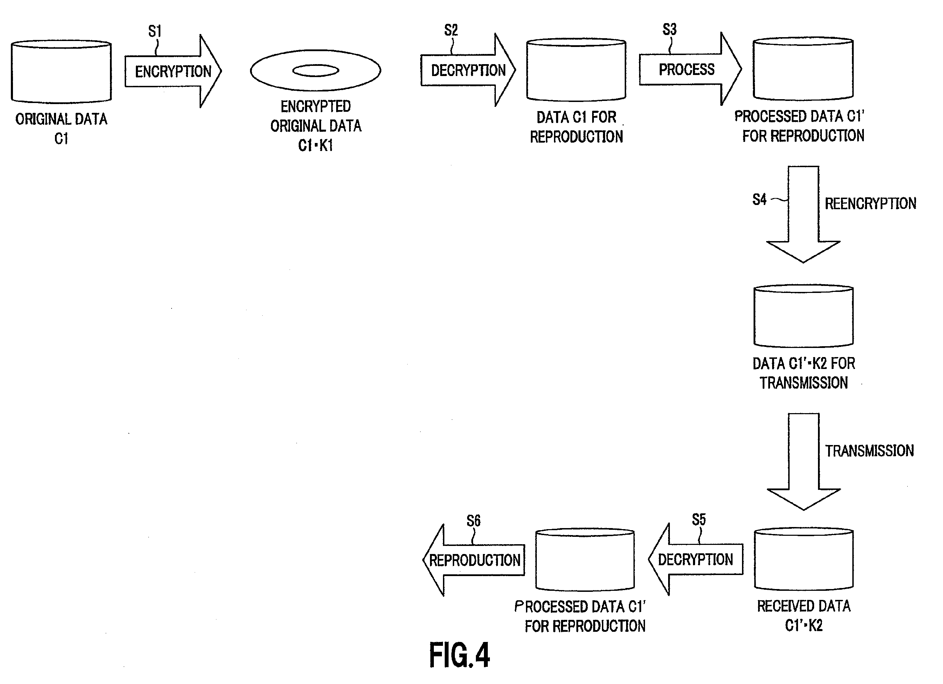

Next, a description will be given of data processing operation and its state in each stage in the data transmission system 50 with reference to FIG. 4.

In the data transmission system 50, original data C1 that has been generated in the form of clear text is encrypted using one or more encryption technique at distribution time for safe access and supplied as data C1·K1 that has been encrypted using, for example, a key K1 to the transmitter 10 (stage S1).

The data C1·K1 that has been encrypted in the stage S1 is then safely decrypted within the transmitter 10 by the decryption section 11 to become clear text data C1 for reproduction (stage S2).

On the transmitter 10 side, for safe transmission, a part of the clear text data C1 for reproduction that has been decrypted in the stage S2 is processed by the reencryption section 12 before reencryption processing to become processed clear text data C1' for reproduction (stage S3).

The processed clear text data C1' for reproduction is reencrypted by the reencryption section 12 using the same encryption technique that can be decrypted both by the transmitter 10 and the receiver 20 to become data C1'·K2 for transmission that has been reencrypted using, for example, a key K2 (stage S4).

More specifically, in the stage S3, of the data for reproduction conforming to a format, the data in an unallocated region such as a reserved region is changed or deleted, and reencryption is performed for the transmission in the stage S4. The reencrypted data C1'·K2 for transmission is transmitted to the receiver 20.

Since the data C1'·K2 for transmission is encrypted at the transmission time as described above, safety of the data can be ensured even when the data is output to an external device.

The receiver 20 decrypts the received data C1'·K2 for transmission by the decryption section 21 using the encryption technique employed at the transmission time, that is, using the key K2 (stage S5). As a result, the processed clear text data C1' for reproduction can be obtained within the receiver 20.

The receiver 20 side is configured to be capable of reproducing the clear text data C1' for reproduction obtained as described above (stage S6).

That is, in the data transmission system 50, data transmission has been completed with the safety of data ensured.

The decryption section 21 on the receiver 20 side applies decryption effective at the transmission time to the transmitted data C1'·K2 for transmission to obtain clear text data C1' for reproduction. A part of the data that has not been transmitted is supplemented, as needed, with an appropriate value. The data obtained here does not entirely correspond to the original clear text data. However, since the data conforms to a format, it is possible to reproduce the data without problems.

In the data transmission system 50, even if a malicious receiver 20 has obtained the original encrypted data C1·K1 in some way, the receiver 20 can obtain only the processed clear text data C1' for reproduction from the data C1'·K2 for transmission, that is, it cannot obtain a pair of the complete cipher text C1·K1 and clear text C1. It is impossible to analyze the encryption technique using the key K1 that has been applied to the original data C1 in the stage S1 with the processed clear text data C1' for reproduction. This prevents strength of the encryption technique to the original data C1 in the stage S1 from being decreased.

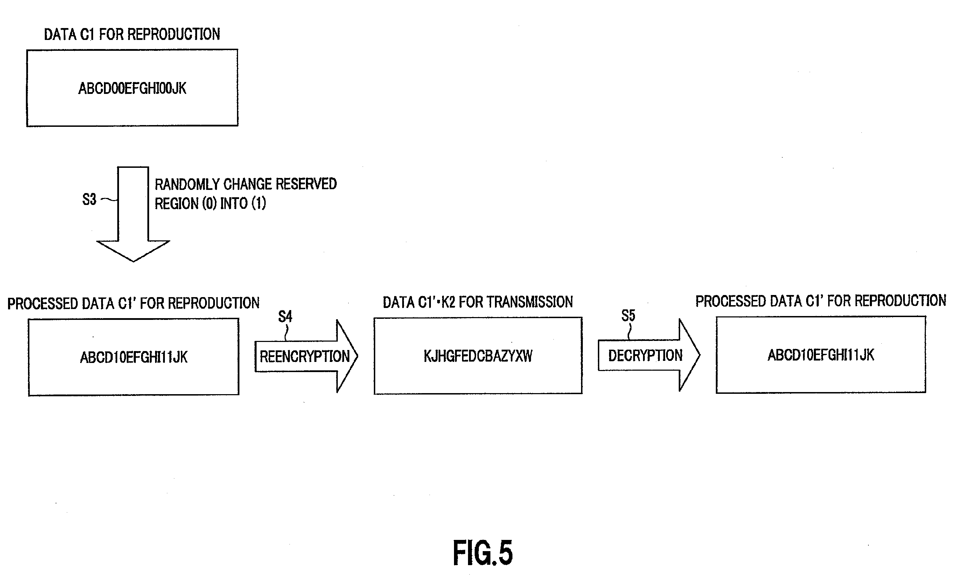

A concrete example of data processing operation in each stage in the data transmission system 50 will be described with reference to FIG. 5.

In the data transmission system 50, clear text data C1 for reproduction (corresponding to original data C1) obtained by decrypting the encrypted data C1·K1 on the transmitter 10 side is assumed to be [ABCD00EFGHI00JK]. In this format of the clear text data C1 for reproduction, data [00] corresponding to a reserved region exists between data [ABCD] and data [EFGHI], and between data [EFGHI] and data [JK].

The data transmission system 50 to which the present invention is applied allows the reencryption section 12 on the transmitter 10 side to process the decrypted clear text data C1 for reproduction, that is, [ABCD00EFGHI00JK] to randomly change each data [0] of the reserved region that exists between data [ABCD] and data [EFGHI], and between data [EFGHI] and data [JK] into data [1], thereby generating processed clear text data C1' for reproduction, that is, for example, [ABCD10EFGHI11JK]. Naturally, this process needs to be performed unbeknownst to the receiver 20. The reencryption section 12 then reencrypts the processed clear text data C1' for reproduction, that is, [ABCD10EFGHI11JK] using the key K2 to generate data C1'·K2 for transmission, that is, for example, [KJHGFEDCBAZYXW], and transmits it to the receiver 20.

The decryption section 21 on the receiver 20 side decrypts the transmitted data C1'·K2 for transmission, that is, [KJHGFEDCBAZYXW] to obtain the processed clear text data C1' for reproduction, that is, [ABCD10EFGHI11JK]. Naturally, the processed clear text data C1' for reproduction, that is, [ABCD10EFGHI11JK] does not entirely correspond to the original data C1 to be transmitted under normal circumstances, that is, [ABCD00EFGHI00JK]. However, since the part different from the original data is a reserved region that is not used for process conforming to a format, it is possible for the reproduction section 22 of the receiver 20 to reproduce the data without problems.

As another embodiment, the transmitter 10 can delete a part of the reserved region on a predetermined format that does not influence contents reproduction so as to transmit data to the receiver 20. In this case, the decryption section 21 of the receiver 20 detects the deleted reserved region, then supplements it with dummy data, and inputs the supplemented data into the reproduction section 22, thereby reproducing its contents.

As described above, the data C1' for reproduction obtained within the receiver 20 is made different from the original data C1 to be input to the transmitter 10 after being encrypted using the key K1. This makes it difficult for a malicious receiver 20 to derive the encryption process K1 used for generating the encrypted original data from the data C1' for reproduction and the encrypted original data C1·K1 even if the malicious receiver 20 has obtained large numbers of pairs of data C1' for reproduction and the encrypted original data C1·K1 that corresponds to the data C1' for reproduction. As a result, the encryption technique to the original data C1 can be protected.

In the data transmission system 50, the method that randomly changes a reserved region is employed. Alternatively, however, a method that deletes data of the reserved region at transmission time and adds an appropriate data on the receiver 20 side can be employed. Also in this case, the same advantage as above can be obtained.

It is possible to process a data part within the allowable range depending on the type of transmission data.

In the case of voice data, if a data part is processed or deleted, the processed portion may noticeably influence reproduction output of the data. On the other hand, in the case of video data, even if a data part thereof is processed, the processed portion is less represented in the reproduction image thereof in many cases. Even if spatial or temporal correlated image is processed, for example, to delete one frame for each consecutive frames, the processed portion is less represented in the reproduction image. It is also relatively easy to supplement the data whose image data has been partly deleted with image data positioned before and after the deleted image data. In a format independently having a region in which random data that does not influence data reproduction exists, it is possible to rewrite data in the region in encrypting original data. As a result, even if the original data is in the open for some reason, no dependency relation with the encryption technique applied to the original data exists.

In current encryption techniques, a very slight difference produces entirely different results. The above process eliminates dependency relation with the encryption technique applied to the original data, thereby safely performing data transmission with the strength of mutual encryption techniques maintained.

## Claims

1. A data transmission method that transmits an input source data that has been encrypted using a first encryption scheme into the data form that a receiver can decrypt, comprising the steps of:
decrypting an encryption according to the first encryption scheme applied to the input source data;
applying predetermined process to data in a predetermined position in the decrypted source data;
encrypting the source data in which the predetermined process has been applied to the data in a predetermined position into the data form that the receiver can decrypt using a second encryption scheme different from the first encryption scheme; and
transmitting the data that has been encrypted according to the second encryption scheme to the receiver.

2. The data transmission method according to claim 1, wherein the data in a predetermined position to which predetermined process is applied does not involve reproduction of the source data performed in the receiver.

3. The data transmission method according to claim 1, wherein the predetermined process applied to the data in a predetermined position in the decrypted source data is substitution with other data.

4. The data transmission method according to claim 1, wherein the predetermined process applied to the data in a predetermined position in the decrypted source data is deletion of the data in a predetermined position.

5. The data transmission method according to claim 1, comprising:
processing a part of data that is not required in a decryption unit, the data conforming to a format having an unallocated region such as a reserved region; and
applying encryption to the processed data using the second encryption scheme.

6. A data transmission apparatus that transmits an input source data that has been encrypted using a first encryption scheme into the data form that a receiver (20) can decrypt, comprising:
decryption means (11) for decrypting an encryption according to the first encryption scheme applied to the input source data;
data process means for applying predetermined process to data in a predetermined position in the decrypted source data;
encryption means (12) for encrypting the source data in which the predetermined process has been applied to the data in a predetermined position into the data form that the receiver (20) can decrypt using a second encryption scheme different from the first encryption scheme; and
transmission means for transmitting the data that has been encrypted according to the second encryption scheme to the receiver (20).

7. The data transmission apparatus according to claim 6, wherein the data in a predetermined position to which predetermined process is applied does not involve reproduction of the source data performed in the receiver (20).

8. The data transmission apparatus according to claim 6, wherein the predetermined process applied to the data in a predetermined position in the decrypted source data is substitution with other data.

9. The data transmission apparatus according to claim 6, wherein the predetermined process applied to the data in a predetermined position in the decrypted source data is deletion of the data in a predetermined position.

10. The data transmission apparatus according to claim 6, comprising:
processing a part of data that is not required in a decryption unit, the data conforming to a format having an unallocated region such as a reserved region; and
applying encryption to the processed data using the second encryption scheme.

11. A data receiving apparatus that receives the transmitted encrypted reproduction data and reproduces the data, the data transmitted to the receiver having been obtained by decrypting an encryption according to the first encryption scheme applied to the input source data that has been encrypted, applying predetermined process to data in a predetermined position in the decrypted source data, encrypting the source data in which the predetermined process has been applied to the data in a predetermined position into the data form that the receiver (20) can decrypt using a second encryption scheme different from the first encryption scheme, the receiver comprising:
reception means for receiving the encrypted reproduction data;
reproduction means for reproducing the source data;
decryption means (21) for decrypting the encrypted reproduction data received by the reception means;
detection means for detecting predetermined process applied to a part of the decrypted reproduction data; and
reproduction data supplement means (22) for generating reproduction data that the reproduction means can reproduce, which is substantially the same as a part of the source data that has been processed, and adding the reproduction data to the detected processed portion so as to supply the reproduction means with the supplemented data.

12. The data transmission apparatus according to claim 11, wherein the predetermined process applied to a part of the reproduction data is deletion of a part of the source data.
